(19) Europäisches Patentamt / European Patent Office / Office européen des brevets

(11) **EP 2 177 064 B1**

(12) **EUROPEAN PATENT SPECIFICATION**

(45) Date of publication and mention
of the grant of the patent:
**17.09.2014 Bulletin 2014/38**

(51) Int Cl.:
*H04W 28/12* (2009.01)  *H04L 12/801* (2013.01)
*H04L 12/851* (2013.01)  *H04L 12/825* (2013.01)

(21) Application number: **09780658.2**

(86) International application number:
**PCT/EP2009/059095**

(22) Date of filing: **15.07.2009**

(87) International publication number:
**WO 2010/010028 (28.01.2010 Gazette 2010/04)**

(54) **CONTROL OF DATA FLOW**

KONTROLLE DES DATENFLUSSES

CONTRÔLE DE FLUX DE DONNÉES

(84) Designated Contracting States:
**AT BE BG CH CY CZ DE DK EE ES FI FR GR HR
HU IE IS IT LI LT LU LV MC MK MT NL NO PL PT
RO SE SI SK SM TR**

(30) Priority: **25.07.2008 GB 0813677**

(43) Date of publication of application:
**21.04.2010 Bulletin 2010/16**

(73) Proprietor: **Cambridge Silicon Radio Limited
Cambridge CB4 0WZ (GB)**

(72) Inventor: **THOUKYDIDES, Alexander
Cambridge CB24 8XL (GB)**

(74) Representative: **Gillard, Matthew Paul et al
Withers & Rogers LLP
4 More London Riverside
London
SE1 2AU (GB)**

(56) References cited:
• AD KAMERMAN AND LEO MONTEBAN:
"WaveLAN-II: A High-Performance Wireless LAN
for the Unlicensed Band" BELL LABS
TECHNICAL JOURNAL, [Online] vol. 2, 14 August
2002 (2002-08-14), - 14 August 2002 (2002-08-14)
pages 118-133, XP002549449 Retrieved from the
Internet: URL:http:
//www3.interscience.wiley.com/cgi -bin/fulltext/
97518326/PDFSTART?CRETRY=1&S RETRY=0>
[retrieved on 2009-10-07]
• CHI-FAI WONG ET AL: "MMC05-6: PACA: Peer-
Assisted Channel Assignment for Home Wireless
LANs" GLOBAL TELECOMMUNICATIONS
CONFERENCE, 2006. GLOBECOM '06. IEEE,
IEEE, PI, 1 November 2006 (2006-11-01), pages
1-6, XP031075228 ISBN: 978-1-4244-0356-1
• HAKYUNG JUNG ET AL: "Augmented Split-TCP
over Wireless LANs" COMMUNICATIONS, 2006.
ICC '06. IEEE INTERNATIONAL CONFERENCE
ON, IEEE, PI, 1 June 2006 (2006-06-01), pages
5420-5425, XP031025777 ISBN:
978-1-4244-0354-7
• JIAN-HAO HU ET AL: "FDA: a novel base station
flow control scheme for TCP over heterogeneous
networks" PROCEEDINGS IEEE INFOCOM 2001.
CONFERENCE ON COMPUTER
COMMUNICATIONS. TWENTIETH ANNUAL
JOINT CONFERENCE OF THE IEEE COMPUTER
AND COMMUNICATIONS SOCIETY (CAT. NO.
01CH37213); [PROCEEDINGS IEEE INFOCOM.
THE CONFERENCE ON COMPUTER
COMMUNICATIONS], PISCAT, vol. 1, 22 April
2001 (2001-04-22), pages 142-151, XP010538694
ISBN: 978-0-7803-7016-6

**Description**

This invention relates to reduction of data rate of radio messages sent over an air interface, especially where flow control of data into a communications device is required.

Communication devices such as Ethernet routers, mobile telephones and PDAs (personal digital assistants) operate under various communication protocols e.g. Bluetooth, IEEE 802.11b/g etc. The protocol defines various features of the communication system, such as transmission frequency, packet size and error checking to name but a few.

Such devices are increasingly being designed to carry out multiple functions beyond their basic voice and message communications. For example, they may be capable of downloading music and ringtones from the internet to be stored and subsequently played and have an in-built camera and video recorder. They may also be equipped with short range frequency-hopping radio systems such as Bluetooth. As a result, such devices effectively operate as a computer, wherein the transceiver (which receives incoming data and transmits outgoing data and implements various protocols) passes data to or receives data from a central processing unit (CPU). The CPU controls other modules such as the camera, data and voice transceivers and various memories.

Any device that receives, uses and transmits data needs to use flow control of some sort in order to avoid the CPU and other modules from becoming overloaded and losing data. Memory buffers can be used to hold data until the CPU or other module is ready and available to process it, thus providing a load-balancing mechanism to deal with short-term data bursts. However, such buffers have a finite capacity and therefore flow control is additionally required. Currently flow control is used within communication devices, for example between the external transceiver and the CPU. There has been little need for flow control of communications over the air interface into the mobile device as such transmission has been slower than transmission between the external transceiver and the CPU. However, in view of increasingly fast air transmission protocols and the increasing number of auxiliary tasks beyond communication which mobile devices can perform, a need has arisen for flow control over the air interface. One particular data flow bottleneck which could be eased by data flow control at the air interface is between the transceiver and the CPU.

Some data transmission protocols already incorporate flow control features in the packets being transmitted. An example of such a method of flow control is the Link Controller flow control mechanism which forms part of the Bluetooth protocol. This feature uses a field in the header of Bluetooth packets known as the FLOW field. This field is set to STOP or GO in dependence on congestion at the receiving device. However, some protocols such as IEEE 802.11 do not incorporate flow control features at the air interface and require alternative mechanisms to avoid packet loss. Under some conditions it may also be desirable to use alternative mechanisms even when the protocol already incorporates flow control features. It would therefore be desirable to provide flow control at the air interface by some other means.

Ad Kamerman and Leo Monteban: "WaveLAN-II: A High-Performance Wireless LAN for the Unlicensed Band", Bell Labs Technical Journal, [Online] vol. 2, 14 August 2002, pages 118-133 describes a system in which, when a receiving device becomes overloaded and repeatedly fails to send an ACK to a transmitting device, the data rate is reduced. The decision to reduce the data rate is made by the transmitting device following two consecutive missed ACK slots. Once the receiving device has cleared its buffers enough to send 10 good ACKS the data rate is upgraded.

According to the present invention, a transceiver as set forth in claim 1 and a method of reducing the data rate as set forth in claim 12 are provided Embodiments of the invention are claimed in the dependent claims.

According to a first aspect of the present invention, there is provided a transceiver comprising: a receiving means, arranged to receive messages transmitted across an air interface in accordance with a protocol, the receiving means having an output; and a transmitting means, arranged to transmit signals across an air interface, wherein the transmitting means is arranged to, in response to actual and/or predicted congestion of data flow at the output of the receiving means, use a feature of the protocol intended for a use other than flow control to initiate reduction in the data rate of an incoming message by requesting a reduction in the size of at least one packet forming the message.

According to a second aspect of the present invention, there is provided a telecommunications device comprising: a processing means; a receiving means, arranged to receive messages transmitted across an air interface in accordance with a protocol, the receiving means having an output to the processing means; and a transmitting means, arranged to transmit signals across an air interface, wherein the transmitting means is arranged to, in response to actual and/or predicted congestion of data flow at the output to the processing means, use a feature of the protocol intended for a use other than flow control to initiate a reduction in the data rate of an incoming message by requesting a reduction in the size of at least one packet forming the message.

According to a third aspect of the present invention, there is provided a method of reducing the data rate of an incoming message transmitted over an air interface, comprising the steps of: receiving transmitted messages at a receiving means in accordance with a protocol; outputting messages at an output of the receiving means; and in response to actual or predicted congestion of data flow at the output of the receiving means, using a feature of the protocol intended for a use other than flow control to initiate a reduction in the data rate of an incoming message by requesting a reduction in the size of at least one packet forming the message.

The invention will now be described, by way of example, with reference to the accompanying drawings, in which :

Figure 1 shows a mobile telephone in communication with a transmitter over an air interface;
Figure 2 shows in more detail the transceiver and the CPU of the mobile telephone of figure 1; and
Figure 3 shows a standard packet of a data message together with a different packet format used in an embodiment of the invention.

In the figures, like reference numerals indicate like parts.

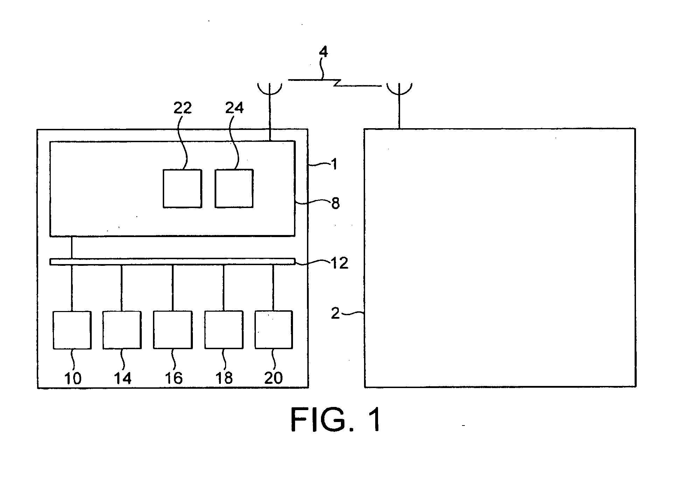

Figure 1 shows a mobile telephone 1 in communication with a remote transmitter 2 over an air interface 4. The mobile telephone 1 has a transceiver 8 for transmitting and receiving external signals and data messages via an aerial 6. The transceiver 8 has various other functions which will be explained below. The transceiver 8 has an output in the mobile telephone 1 to a bus 12, through which it can communicate with various other modules of the mobile telephone 1 which are also attached to the bus 12. One of these modules is a CPU (central processing unit) 10. Others shown are a memory 14, a camera module 16, a video player 18 and a voice decoder 20. It will be appreciated by those skilled in the art that many other modules could also be present and that they may be connected via multiple independent busses rather than sharing a single bus.

In figure 1, signals are shown to be received from and transmitted to the remote transmitter 2. The remote transmitter 2 in this example is a mobile telecommunications transmitter.

It should be noted that the various elements of figure 1 are intended to represent functional features of the system and the mobile telephone 1 and are not shown operatively or to scale.

In operation, communication over the air interface 4 is carried out in accordance with a standard protocol, which in this embodiment is the IEEE 802.11 protocol. The standard protocol defines various features of transmission, such as the format of control signals, standard packet format and size, the transmission frequency, the length of each data burst and so on. The protocol also defines other features which affect how data is processed in the mobile telephone 1 such as error checking and correction, registration of users, connections between users etc. Both messages and control signals are transmitted over the air interface 4. Messages are segmented into packets up to the size of the Maximum Transmission Unit (MTU) prior to being transmitted. In this context the words "data" and "message" are used to distinguish from signals e.g. control signals and are intended to cover all types of data e.g. video, voice, text etc.

When the transmitter 2 sends a signal or message to the mobile telephone 1, it is received via the aerial 6 at the transceiver 8. The transceiver 8 carries out various processing steps on the signal or message and then outputs it via the bus 12, usually to the CPU 10. The CPU 10 comprises various processing layers as known in the art, for example an application layer, a transport layer, and a network layer. The CPU 10 carries out some processing on the signal or message before passing data to the appropriate module such as the memory 14, or the video player 18. The mobile telephone 1 operates an internal data flow protocol which prevents the modules from becoming overloaded. For example, if a large quantity of video data is received for the video player 18, some of the data can be buffered in a buffer memory of the video player 18 and the rest can be held in the memory 14 until the video player 18 has the capacity to receive and use it. The video player 18 sends out a signal to the transceiver 8 over the bus 12 in the event that its buffer is full, so that the transceiver 8 knows to store data in the memory 14 until it receives a different, "clear to transmit" signal from the video player 18.

The standard protocol under which data is transmitted between the mobile telephone 1 and the remote transmitter 2 does not provide for data flow control over the air interface 4. This can give rise to problems with receiving and processing data, in particular in situations where large quantities of data are required to be processed as quickly as possible. For example, the transferring of files under the File Transfer Protocol (FTP) and web browsing are applications which could be affected, especially by fluctuations in sustainable throughput. There is a particular risk of congestion in the bus 12 if the CPU 10 is busy processing data or a large quantity of other data such as video data or camera data is being sent across the bus and processed.

In order to address the above-described problem, the mobile telephone 1, and in particular the transceiver 8 do provide such air interface data flow control in accordance with the invention by using features of the standard protocol normally used for transmission of messages but not in the standard manner. In other words, embodiments of the invention make use of protocol features intended for a use other than flow control to initiate flow control. A more detailed operation of the transceiver 8 and the data flow control over the air interface 4 will now be described.

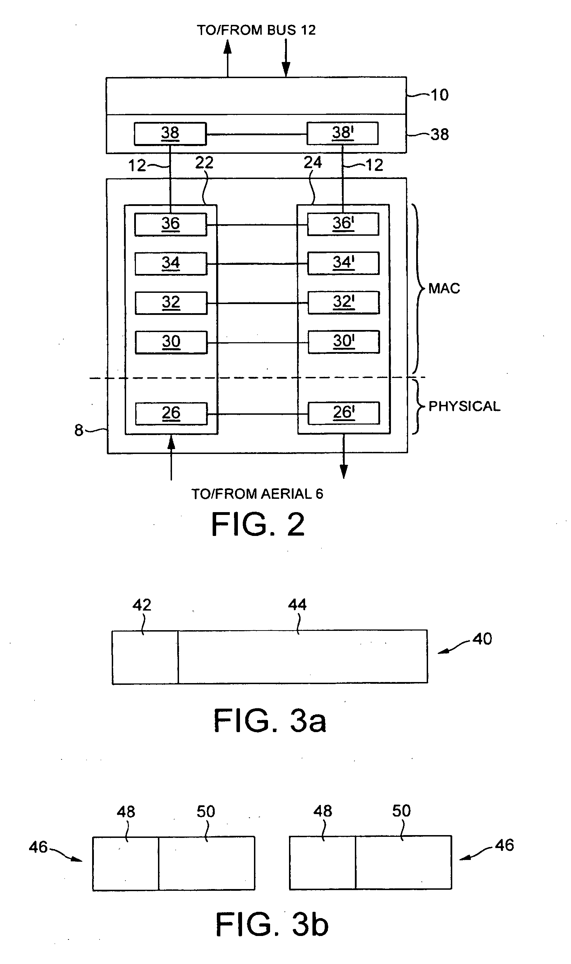

Figure 2 shows a schematic diagram of the transceiver 8 and the CPU 10. As in figure 1, various modules are shown to describe some of the functions of the transceiver 8 but these are not intended to be an actual representation of how these functions are carried out and do not represent all the functions carried out by the transceiver 8 and the CPU 10.

The transceiver 8 comprises a receiver 22 and a transmitter 24. The receiver 22 and the transmitter 24 together carry out the functions of the transceiver 8. In general, data and signals incoming at the aerial 6 are received into the receiver 22, some processing is carried out on them, and then they are output from the transceiver 8 to the CPU 10 and on to others of the modules 14, 18 etc. along the bus 12 (or multiple busses if provided). Similarly, data and signals are sent via the CPU 10 from others of the modules 14, 16 etc. along the bus 12 and into the transceiver 8. The transmitter 24 of the transceiver 8 carries out some processing before sending data and signals out across the air interface 4 via the aerial 6. Some signalling functions are carried out entirely within the transceiver 8.

A number of processing modules are shown in both the receiver 22 and the transmitter 24. These modules, together with the modules 10-20 shown in the mobile telephone 1 in figure 1, represent the many functions carried out by the mobile telephone 1. In the case of the receiver 22, these are a series of functions which are carried out on incoming data and signals received via the antenna 6. In the case of the transmitter 24, these are a series of functions which are carried out on outgoing data and signals. Each function in the receiver is shown to be functionally connected to its equivalent function in the transmitter. In practice the receiving and transmitting functions of a particular function may not be this distinct, but are shown as such in the figure for a better understanding of the receiving and transmitting functions. Also, in practice, there is not necessarily any coupling between the transmit and receive paths, for example, segmentation and reassembly often operate independently. However, there is generally a logical link between the corresponding function in the transmitter and receiver, hence the links shown in figure 2. The functions of the CPU 10 and the other modules 14, 16 etc. are known for the purposes of this embodiment as "higher layers" whilst the functions within the transceiver 8 are known as "lower layers". Some of these layers will now be explained. Equivalent receiving and transmitting functions are given the same reference numeral base and primed respectively.

Starting at the bottom of the transceiver 22 as shown in the figure, the first processing layer is a networking protocol 26, 26', which is one of a number of protocol layers known as the "Physical Layer". The other protocols are omitted from the figure for clarity. The receive side protocol 26 receives and analyses packets of data to determine the packet format. The transmitter side equivalent layer 26' specifies some aspects of the format of outgoing packets. Thus this protocol conducts packet handling functions.

There are then a number of "data link protocols" embodied as various modules 30, 32, 34, 36, 38 which deal with incoming signals regarding setting up the user of the mobile telephone 1 for particular communications and processing packets. In practice, there are many more functions and they are known collectively as the Medium Access Control (MAC) layer but for clarity only a handful of these functions are shown. The equivalent modules 30', 32' etc. carry out similar functions in the transmitter 24. In practice there may not be such a separation into functions but the modules are used to assist in describing embodiments of the invention. Some of these functions will now be described.

The first MAC module 30, 30' shown is a power save function which enables battery power in the mobile phone 1 to be conserved by putting the transceiver 8 into a power save mode. This function represents a number of power save functions which are based on usage of the transceiver 8. One way in which a power save mode is activated is by way of a timer i.e. after a certain length of time during which the user does not use the mobile telephone 1, as is standard in the art. Another way is by monitoring of activity levels in the transceiver 8 and determining when they are below a certain threshold. This function monitors the period of inactivity or low activity and if it wishes to put the transceiver in power save mode, initiates a "sleep state" or "dozing state" in the transceiver 8. When the transceiver 8 is in power saving mode, it would be undesirable for the mobile telephone 1 to be sent large quantities of data because the receiver 22 is inactive so it would not receive the data. There is a time delay to restore active power levels, during which incoming data could still not be received. Therefore, the transmit side power save layer 30' sends a signal to the remote transmitter 2 over the air interface 4 indicating that it is in sleep mode. The remote transmitter 2 then buffers packets intended for the mobile telephone 1 rather than transmitting them. The fact that packets are buffered is announced to the mobile telephone 1 by means of periodic Beacon frames. Whilst in power save mode, the transceiver 8 must still be able to receive periodic Beacon frames. If a Beacon frame is received from the remote transmitter 2 which does indicate that data is buffered, the power save function 30 initiates restoration of active power levels in the transceiver 8 before informing the remote transmitter 2 that the data can be sent, thus avoiding loss of data. Alternatively a PS-Poll frame can be sent by the power save function 30' to trigger a single packet to be transmitted to the mobile telephone 1. An alternative feature of the 802.11 protocol for triggering buffered frames to be transmitted is Unscheduled Automatic Power Save Delivery (U-ASPD) and works in a similar manner to the use of PS-Poll frames except that normal data frames can act as the trigger for buffered frames to be transmitted. In some situations a further feature of the 802.11 protocol known as Scheduled ASPD (S-ASPD) is used by a remote transmitter to send packets without a trigger according to a schedule. In this case, the remote transmitter 2 would inform the transceiver 8 of the schedule and the transceiver 8 would initiate restoration of active power levels in time to receive the scheduled packets.

Other modules shown are an error checking module 32, an error correction module 34 and a reassembly/segmentation engine 36. The error checking module 32 looks at the CRC check digit in incoming packets and then sends a signal to the error correction module 34 to inform it that the packet has been received and whether or not there is an error in a received packet. The transmitter side error correction module 34' acknowledges receipt of the packet by sending an acknowledgement signal across the air interface 4 to the remote transmitter 2. If there is no error, the received packet continues to the reassembly engine 36. If, on the other hand, there is an error, the transmission side error correction module 34' requests the remote transmitter 2 to re-transmit the packet.

If the remote transmitter 2 sends a packet to the mobile telephone 1 and it does not receive an acknowledgement signal back, the remote transmitter 2 assumes that the packet was not received and re-sends it, in accordance with the standard protocol.

The reassembly engine 36 receives message data in the form of packets and reassembles them into messages which can be sent on across the bus 12. This function is possible because each packet contains a header which provides information about what message the packet forms part of and its place in the message etc. Having decoded the packets and re-formed them into messages, much of the information contained in the headers is discarded. However some of the information is retained and sent to the CPU 10 such as destination address information and quality of Service (QoS) information. Similarly, the segmentation engine 36' segments outgoing data into packets.

Finally, a control function 38, 38' is shown. This function communicates with and sends out instructions to the various modules of the transceiver 8 and it is shown connected to all the other modules to represent this. Thus in reality it would be more distributed than shown in the figure. One of its functions is to enable flow control within the mobile telephone 1 in conjunction with the various modules 14, 18 etc. by communicating with the bus 12. Thus if the bus 12 is congested with data, the control module 38, 38' allows buffering of data until there is capacity to send it to the appropriate module. In this embodiment the bus 12 implements its own congestion detection but alternatively the control function 38 can "detect" congestion in the bus 12 because it knows what data, if any, is currently passing onto the bus 12 from the CPU 10 and hence knows whether there is capacity for more data to be passed on. The bus 12 or the control function 38 can also "detect" congestion by receiving a signal from one of the other modules 14, 18 that they are too busy to accept further data, thus informing the control function 38 that any further data for that module should be held. Furthermore, the control function 38 is aware of what data is being received from or sent to the transceiver 8 and is thereby aware of congestion at the output of the transceiver 8.

Having described some of the functions used within the mobile telephone 1, various means by which the data rate of transmission by the remote transmitter 2 to the mobile telephone 1 can be reduced in accordance with the invention will now be described.

In a first embodiment, use is made of the power saving module 30. If the control layer 38 is aware of congestion as described above, it sends an instructing signal to the power saving module 30. The power saving module 30, 30' differs from power saving modules known in the art in that in addition to being capable of initiating power saving mode based on inactivity in the transceiver 8 as described above, it also has the capability to receive and process instructing signals from the control function 38. Thus upon receiving the signal, the power saving module 30' sends out a signal over the air interface 4 informing the remote transmitter 2 that the transceiver 8 is in power saving mode. This is implemented by changing the state of the Power Management (PM) bit in the packet header of packets being transmitted. Thus no extra packets or signals are required unless there is no current transmission (in which case a dedicated signal can be sent). Consequently, the remote transmitter temporarily stops transmitting messages to the mobile telephone 1, and hence the data flow rate across the air interface 4 is reduced or stopped.

It should be noted that in the situation of receiving such an instructing signal from the control function 38, the power saving module 30 does not initiate power saving in the transceiver 8. This is because the transceiver 8 is actually busy processing data and sending it to the CPU 10 or receiving data from the CPU 10 and preparing to transmit it, hence giving rise to the congestion. So the transceiver 8 is pretending to the remote transmitter 2 that it is in power saving mode in order to reduce the incoming data flow, whilst it continues to process data and other modules of the mobile telephone 1 continue to process data that has previously been received.

When there is no longer congestion in the bus 12 the control function 38 sends a different instructing signal to the power saving module 30, whereupon the power saving module 30' sends a signal to the remote transmitter 2 over the air interface 4 informing it that the transceiver 8 is no longer in power saving mode (i.e. it changes the state of the PM bit back again). Thus the remote transmitter 2 resumes transmission of signals and data messages to the mobile telephone 1.

An alternative to sending a signal informing the remote transmitter 2 that the transceiver 8 is no longer in power saving mode is to send a different signal requesting transmission of an individual packet. Under the IEEE 802.11 protocol this is done by sending a PS-Poll frame. Thus rather than stopping data flow altogether or allowing data flow to resume at a rate dictated by the remote transmitter 2, the transceiver 8 can control the rate at which data is received i.e to retrieve packets at the desired rate rather than as fast as the air interface could provide them. This control does not have to be dependent on instantaneous congestion but can be used to control incoming data flow at an arbitrary rate over a longer period of time, thereby smoothing out the data flow to make it more manageable.

In a second embodiment, use is made of the error checking module 32, 32' and the error correction module 34, 34'. If there is congestion at the bus 12, the control function 38, 38' sends out an instructing signal to the error checking module 32. The error checking module 32 differs from error checking modules known in the art in that in addition to being capable of receiving incoming packets and carrying out error checks on them as described above, it can additionally receive and process instructing signals from the control function 38, 38'. Thus upon receiving the signal, the error checking module 32 sends a signal to the receive side error correction module 34 that there is an error in the next received packet. Consequently, the transmitter side error correction module 34' sends a signal over the air interface 4 to the remote transmitter 2 requesting it to re-transmit the packet. Therefore, because a previously-received packet is re-transmitted as opposed to a completely new packet, the data rate into the mobile telephone 1 is effectively reduced.

Having received the signal from the control function 38', the error checking module 32 continues with subsequently received packets to inform the receive side error correction module 34 that there is an error in the packet and therefore the transmit side error correction module 34' continues to request re-transmission of packets. It can be understood that even though there is not actually any error in the received packets, the control function 38 is pretending to the error checking module 32 and the error correction module 34 that there are errors and thus manipulating them to operate as though there were real errors.

This mechanism is not applied to every single received packet because if that were done, it would eventually appear to the remote transmitter 2 that the transceiver 8 was no longer present for communications. If this happened, the link would be dropped which would be undesirable. Thus the control function 38 varies the instructions sent to the error checking module 32 to allow some packets to be received as normal and some to be re-requested.

When the control layer 38 detects that there is no longer congestion in the bus 12 it sends a different instructing signal to the error checking module 32 instructing it to resume normal packet processing. Consequently the data flow rate from the remote transmitter 2 into the mobile telephone 1 is resumed.

A third embodiment also makes use of the error checking module 32 and the error correction module 34. This embodiment is similar to the second embodiment but the instructing signal sent from the control function 38' to the error checking module 32 is different because it informs the error checking module 32 to act as though a packet has not been received. Upon receiving this signal, the error checking module does not pass on any information to the error correction module 34 about the next packet which it receives. Consequently, the transmission side error correction module 34' does not acknowledge receipt of the packet and therefore the remote transmitter 2 assumes that the packet did not arrive at the mobile telephone 1 and re-transmits it, as explained above. Therefore, because a previously-received packet is re-transmitted as opposed to a completely new packet, the data rate into the mobile telephone 1 is effectively reduced.

This process is repeated for subsequently received packets until the control layer 38' sends a signal to the error checking module 32 that it should resume normal packet processing. Again, as in the previous embodiment, the technique is not applied to all packets so as to avoid the possibility of the link being dropped.

It will be understood by those skilled in the art that the second embodiment makes use of negative acknowledgement signals (NACKs). In the IEEE 802.11 protocol there is no specific NACK signal but this is implied by the lack of acknowledgement of receipt of a packet error-free. However, under other protocols these embodiments could be implemented using a dedicated NACK signal. If the protocol being used does implement a NACK signal as standard, then the second embodiment would be using NACKs.

A fourth embodiment makes use of the transport layer protocol. When there is congestion in the bus 12, the control function 38, 38' sends a signal across the bus 12 to the CPU 10 informing it to request a reduction in the packet size transmitted by the remote transmitter 2. Such a request is implemented in this embodiment in the transport layer of the CPU 10. Thus the CPU 10 sends a signal across the air interface 4 requesting the remote transmitter 2 to reduce the packet size of subsequently-transmitted packets. This reduces the data flow rate as will now be described with reference to figure 3.

Figure 3(a) shows a standard data message packet 40. This packet format is used in the standard protocol under which data is transmitted from the remote transmitter 2 to the mobile telephone 1. For simplicity and by way of explanation only, this packet 40 is considered to be 100 bytes in length. The packet 40 has a header portion 42 which is 10 bytes long and a data portion 44 which is 90 bytes long.

Figure 3(b) shows two reduced-size packets 46 which are smaller than the standard packet 40. Each reduced-size packet 46 is 50 bytes long, hence two reduced-size packets 46 have a total length of 100 bytes, which is the same length as the standard packet 40. Each reduced size packet 46 has a header portion 48 which is 10 bytes long, the same length as the header portion of the standard packet 40. Thus the data portion 50 of each reduced size packet 46 is 40 bytes long. This means that the two reduced-size packets 46 together carry 80 bytes of data. This compares to the standard size packet 40 which carries 90 bytes of data. Hence for the same total packet length of 100 bytes, the two reduced-size packets 46 carry less data than the single standard packet 40.

The effect on the time taken to transmit the two reduced-size packets will now be explained by way of example. Assuming a 54Mb/s modulation rate in the IEEE 802.11 standard, the standard 100 byte packet would take the following time in μs:

$$T_1 = 28 \text{ (DIFS)} + 42 \text{ (data)} + 10 \text{ (SIFS)} + 34 \text{ (ACK)}$$

$$= 114 \text{ μs (+ random back-off)}$$

(where DIFS is Distributed Inter-Frame Space and SIFS is Short Inter-Frame Space)

The time taken to transmit the two reduced-size payloads is calculated in a similar manner but the time taken to transmit each data payload is 34 μs rather than 42μs :

$$T_2 \quad = 2(28 + 34 + 10 + 34)$$
$$= 212 \ \mu s \ (+ \ random \ back\text{-}off)$$

Thus it can be understood that as well as reducing the size of the data payload, the two smaller packets together take longer to transmit, hence the data flow rate is significantly reduced. This is primarily due to the additional overhead associated with double the number of acknowledgements and inter-frame spaces.

As explained above, having reassembled the incoming packets, the reassembly engine 36 only passes some of the header fields and the actual data onto the bus 12. Therefore, by reducing the packet size, less data is passed onto the bus 12 and hence the data flow rate to be processed by the higher layers of the mobile telephone 1 has been reduced.

It will be apparent to the skilled person that the packet size need not be reduced in size by half but that other reductions would have a similar effect.

When the CPU 10 has requested a change in the packet size, packets of the modified size are received and are subject to the usual packet handling by the network protocol 26.

It can be understood by a person skilled in the art that the applicability of the above-described embodiments is not limited to the mobile telephone 1 and remote transmitter 2. The embodiments could be applied to other forms of communications device such as Ethernet routers, PDAs and laptop computers. The remote transmitter 2 could be of a different type. The embodiments could easily be modified to work within other communications systems and other protocols.

Furthermore, the particular arrangement of protocol functions in the transceiver and those functions implemented by the CPU may be different in other embodiments. In other words, whether certain functions are carried out by the CPU or the transceiver and in what protocol layer can be varied in accordance with the design of the device.

It can also be understood that the transceiver 8 and the CPU 10 are capable of operating according to all four embodiments and can decide which to implement. The embodiment used depends on the particular data flow situation at a particular time. The second and third embodiments, involving failing to acknowledge receipt or correct receipt of a packet, are the quickest to invoke and are therefore suitable for reacting to congestion quickly by providing an instantaneous flow control mechanism. However, it is preferable to avoid using these embodiments for too long a continuous period of time as the remote transmitter could be led to believe that the mobile telephone 1 has moved out of range (resulting in the link being dropped) or that the channel conditions have become worse (resulting in inefficient use of lower modulation rates by the remote transmitter 2). The alternative implementation of these embodiments, the use of PS-Poll frames, can be used for longer periods of time to avoid these problems occurring. The fourth embodiment, involving changing the MTU, is relatively slow to implement and is therefore used for long-term flow-rate matching with the capabilities of the mobile telephone 1 rather than to deal with short-term fluctuations in data flow rate. It is relatively slow to implement because it involves negotiation between higher-layer protocol layers and the remote transmitter. This embodiment is also unsuitable for use with data transfer under certain protocols, for example the User Datagram Protocol (UDP) which is used for e.g. short messages and streaming media. The first embodiment, involving faking power-save mode, does not suffer from the problems of the second and third embodiments and is also quicker and simpler to implement than the fourth embodiment. However, it cannot respond instantaneously in the way that the second and third embodiments are able.

The transceiver 8 and the CPU 10 can decide to switch from one mode of data reduction to another. For example, when congestion is first detected the transceiver 8 might start by implementing the second or third embodiments i.e. not ACKing packets. If the congestion remained for some time, the transceiver 8 could change to implementing the fake power save first embodiment using PS-Poll packets. If it turned out that congestion was a long-term problem it could then implement the packet-changing fourth embodiment to change the packet length of received packets.

It can also be understood that any of the embodiments can be implemented whenever the transceiver and CPU choose. Therefore, they do not have to be implemented in response to an actual congestion situation as in the above examples, but could, for example, be implemented to perform rate matching between incoming data and data being sent out to the CPU 10. They could also be implemented to head off predicted short-term congestion and thereby reduce the likelihood of congestion or prevent congestion altogether. The control function 38 is capable of predicting future congestion and future flow rate into the CPU 10 based on the type of data being received and by making an assumption about the type of data it next expects to receive and how much of it. For example, during a file transfer process, if received packet headers indicate that the file is large, the control function 38 knows that there will be many more incoming packets from the same file and can predict congestion issues based on packets already received and current CPU activity. Thus it can initiate alteration of the incoming flow rate to match the flow rate into the CPU 10 or to initiate reduction of the incoming flow rate temporarily.

Thus it can be understood that in general terms embodiments of the invention can be implemented in response to various features of data flow.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

**Claims**

1. A transceiver (8) comprising:

    a receiving means (22), arranged to receive messages transmitted across an air interface (4) in accordance with a protocol, the receiving means having an output; and
    a transmitting means (24), arranged to transmit signals across an air interface,
    **characterised in that** the transmitting means is arranged to, in response to actual and/or predicted congestion of data flow at the output of the receiving means, use a feature of the protocol intended for a use other than flow control to initiate reduction in the data rate of an incoming message by requesting a reduction in the size of at least one packet forming the message.

2. A transceiver according to claim 1, wherein the transmitting means is further arranged to initiate reduction in the data rate of an incoming message by transmitting a signal across the air interface indicating that the transceiver is in a power saving mode.

3. A transceiver according to claim 2, wherein the said signal comprises any one of: a dedicated signal; sending modified data packets; and polling a remote transmitter from which messages are being received across the air interface.

4. A transceiver according to any preceding claim, wherein the transmitting means is further arranged to initiate reduction in the data rate of an incoming message by transmitting a signal across the air interface implicitly or explicitly requesting re-transmission of at least one packet of a message.

5. A transceiver according to any preceding claim, wherein the transmitting means is further arranged to:

    in accordance with the protocol, acknowledge receipt of packets received by the receiving means; and
    initiate reduction in the data rate of the messages by either:

        failing to acknowledge receipt of at least one packet of a message; or
        sending a negative acknowledgement of at least one packet of a message.

6. A transceiver according to any preceding claim, wherein the transmitting means is arranged to initiate reduction in the data rate of an incoming message to a rate substantially matching data flow rate at the output of the receiving means.

7. A telecommunications device comprising:

    a processing means (10); and
    a transceiver according to any of claims 1 to 6,
    the receiving means of said transceiver having an output to the processing means.

8. A telecommunications device according to claim 7, wherein one of the receiving means and the processing means is arranged to detect congestion of data flow at the output of the receiving means and send a signal to the transmitting means informing it of the congestion, thereby causing the transmitting means to initiate reduction in the data rate of an incoming message.

9.   A telecommunications device according to claim 8, wherein the one of the receiving means and the processing means is arranged to detect congestion of data flow at the output of the receiving means based on output data.

10.  A telecommunications device according to any of claims 7 to 9, wherein the receiving means is arranged to detect congestion of data flow at the output of the receiving means by means of a signal received from the processing means indicating that the processing means is unable to receive further data.

11.  A telecommunications device according to any of claims 7 to 10, wherein the processing means comprises any one of the following: a CPU; a video player; a memory; a non-volatile storage medium; another transceiver; and a voice decoder.

12.  A method of reducing the data rate of an incoming message transmitted over an air interface (4), comprising the steps of:

      receiving transmitted messages at a receiving means (22) in accordance with a protocol; and
      outputting messages at an output of the receiving means;
      the method being **characterised by** the further step of, in response to actual and/or predicted congestion of data flow at the output of the receiving means, using a feature of the protocol intended for a use other than flow control to initiate a reduction in the data rate of an incoming message by requesting a reduction in the size of at least one packet forming the message.

**Patentansprüche**

1.   Transceiver (8), der aufweist:

      eine Empfangseinrichtung (22), die ausgelegt ist, Nachrichten, die über eine Luftschnittstelle (4) gesendet werden, gemäß einem Protokoll zu empfangen, wobei die Empfangseinrichtung einen Ausgang aufweist; und
      eine Sendeeinrichtung (24), die ausgelegt ist, Signale über eine Luftschnittstelle zu senden,
      **dadurch gekennzeichnet, dass** die Sendeeinrichtung ausgelegt ist, als Reaktion auf einen tatsächlichen und/oder vorhergesagten Stau eines Datenflusses an dem Ausgang der Empfangseinrichtung ein Merkmal des Protokolls zu verwenden, das für eine andere Nutzung als für die Flusssteuerung beabsichtigt ist, um eine Verringerung der Datenrate einer eingehenden Nachricht durch Anfordern einer Verringerung der Größe mindestens eines Paketes, das die Nachricht bildet, zu initiieren.

2.   Transceiver nach Anspruch 1, wobei die Sendeeinrichtung außerdem ausgelegt ist, eine Verringerung der Datenrate einer eingehenden Nachricht durch Senden eines Signals, das angibt, dass sich der Transceiver in einem Energiesparmodus befindet, über die Luftschnittstelle zu initiieren.

3.   Transceiver nach Anspruch 2, wobei das Signal eines aus den Folgenden aufweist: ein zugeordnetes Signal; Senden von modifizierten Datenpaketen; und Abfragen eines fernen Senders, von dem Nachrichten über die Luftschnittstelle empfangen werden.

4.   Transceiver nach einem der vorhergehenden Ansprüche, wobei die Sendeeinrichtung außerdem ausgelegt ist, eine Verringerung der Datenrate einer eingehenden Nachricht durch Senden eines Signals, das implizit oder explizit ein erneutes Senden mindestens eines Paketes einer Nachricht anfordert, über die Luftschnittstelle zu initiieren.

5.   Transceiver nach einem der vorhergehenden Ansprüche, wobei die Sendeeinrichtung außerdem ausgelegt ist, entsprechend dem Protokoll einen Empfang von Paketen, die von der Empfangsvorrichtung empfangen werden, zu bestätigen; und
      eine Verringerung der Datenrate der Nachrichten zu initiieren durch entweder erfolgloses Bestätigen eines Empfangs mindestens eines Paketes einer Nachricht; oder
      Senden einer negativen Bestätigung des mindestens einen Paketes einer Nachricht.

6.   Transceiver nach einem der vorhergehenden Ansprüche, wobei die Sendeeinrichtung außerdem ausgelegt ist, eine Verringerung der Datenrate einer eingehenden Nachricht auf eine Rate zu initiieren, die im Wesentlichen mit einer Datenflussrate an dem Ausgang der Empfangseinrichtung übereinstimmt.

7.  Telekommunikationsvorrichtung, die aufweist:

    eine Verarbeitungseinrichtung (10); und
    einen Transceiver nach einem der Ansprüche 1 bis 6,
    wobei die Empfangseinrichtung des Transceivers einen Ausgang zu der Verarbeitungseinrichtung aufweist.

8.  Telekommunikationsvorrichtung nach Anspruch 7, wobei eine aus der Empfangseinrichtung und der Verarbeitungseinrichtung ausgelegt ist, einen Stau eines Datenflusses an dem Ausgang der Empfangseinrichtung zu erfassen und ein Signal an die Sendeeinrichtung zu senden, das diese hinsichtlich des Staus informiert, wodurch bewirkt wird, dass die Sendeeinrichtung eine Verringerung der Datenrate einer eingehenden Nachricht initiiert.

9.  Telekommunikationsvorrichtung nach Anspruch 8, wobei die eine aus der Empfangseinrichtung und der Verarbeitungseinrichtung ausgelegt ist, einen Stau eines Datenflusses an dem Ausgang der Empfangseinrichtung auf der Grundlage von Ausgangsdaten zu erfassen.

10. Telekommunikationsvorrichtung nach einem der Ansprüche 7 bis 9, wobei die Empfangseinrichtung ausgelegt ist, einen Stau eines Datenflusses an dem Ausgang der Empfangseinrichtung mittels eines Signals zu erfassen, das von der Verarbeitungseinrichtung empfangen wird und angibt, dass die Verarbeitungseinrichtung nicht in der Lage ist, weitere Daten zu empfangen.

11. Telekommunikationsvorrichtung nach einem der Ansprüche 7 bis 10, wobei die Verarbeitungseinrichtung eines aus den Folgenden aufweist: eine CPU; ein Video-Spieler; ein Speicher; ein nichtflüchtiges Speichermedium; ein anderer Transceiver; und ein Sprachdekodierer.

12. Verfahren zum Verringern der Datenrate einer eingehenden Nachricht, die über eine Luftschnittstelle (4) gesendet wird, das die folgenden Schritte aufweist:

    Empfangen von gesendeten Nachrichten an der Empfangseinrichtung (22) gemäß einem Protokoll; und
    Ausgeben von Nachrichten an einem Ausgang der Empfangseinrichtung;
    wobei das Verfahren durch den folgenden Schritt gekennzeichnet ist: Verwenden eines Merkmals des Protokolls, das für eine andere Nutzung als für die Flusssteuerung beabsichtigt ist, als Reaktion auf einen tatsächlichen und/oder vorhergesagten Stau eines Datenflusses an dem Ausgang der Empfangseinrichtung, um eine Verringerung der Datenrate einer eingehenden Nachricht durch Anfordern einer Verringerung der Größe mindestens eines Paketes, das die Nachricht bildet, zu initiieren.

**Revendications**

1.  Emetteur-récepteur (8) comprenant :

    un moyen de réception (22), configuré pour recevoir des messages émis via une interface radio (4) conformément à un protocole, le moyen de réception ayant une sortie ; et
    un moyen d'émission (24), configuré pour émettre des signaux via une interface radio,
    **caractérisé en ce que** le moyen d'émission est configuré pour utiliser, en réponse à un encombrement présent et/ou prédit d'un flux de données à la sortie du moyen de réception, une caractéristique du protocole prévue pour un usage autre que le contrôle de flux afin de déclencher une réduction du débit de données d'un message arrivant par une demande d'une réduction de la taille d'au moins un paquet formant le message.

2.  Emetteur-récepteur selon la revendication 1, dans lequel le moyen d'émission est en outre configuré pour déclencher une réduction du débit de données d'un message arrivant par une émission d'un signal via l'interface radio indiquant que l'émetteur-récepteur est dans un mode d'économie d'énergie.

3.  Emetteur-récepteur selon la revendication 2, dans lequel ledit signal comprend l'un quelconque parmi : un signal dédié ; un envoi des paquets de données modifiés ; une interrogation d'un émetteur distant duquel des messages ont été reçus via l'interface radio.

**4.** Emetteur-récepteur selon l'une quelconque des revendications précédentes, dans lequel le moyen d'émission est en outre configuré pour déclencher une réduction du débit de données d'un message arrivant par une émission d'un signal via l'interface radio demandant implicitement ou explicitement une réémission d'au moins un paquet d'un message.

**5.** Emetteur-récepteur selon l'une quelconque des revendications précédentes, dans lequel le moyen d'émission est en outre configuré pour :

conformément au protocole, accuser réception des paquets reçus par le moyen de réception ; et
déclencher une réduction du débit de données des messages :

soit en omettant d'accuser réception d'au moins un paquet d'un message ;
soit en envoyant un accusé de réception négatif d'au moins un paquet d'un message.

**6.** Emetteur-récepteur selon l'une quelconque des revendications précédentes, dans lequel le moyen d'émission est configuré pour déclencher une réduction du débit de données d'un message arrivant à un débit correspondant sensiblement au débit du flux de données à la sortie du moyen de réception.

**7.** Dispositif de télécommunication comprenant :

un moyen de traitement (10) ; et
un émetteur-récepteur selon l'une quelconque des revendications 1 à 6,
le moyen de réception dudit émetteur-récepteur ayant une sortie vers le moyen de traitement.

**8.** Dispositif de télécommunication selon la revendication 7, dans lequel au parmi le moyen de réception et le moyen de traitement est configuré pour détecter un encombrement d'un flux de données à la sortie du moyen de réception et pour envoyer un signal au moyen d'émission l'informant de l'encombrement, faisant ainsi que le moyen d'émission déclenche une réduction du débit de données d'un message arrivant.

**9.** Dispositif de télécommunication selon la revendication 8, dans lequel un parmi le moyen de réception et le moyen de traitement est configuré pour détecter un encombrement d'un flux de données à la sortie du moyen de réception sur la base des données de sortie.

**10.** Dispositif de télécommunication selon l'une quelconque des revendications 7 à 9, dans lequel le moyen de réception est configuré pour détecter un encombrement d'un flux de données à la sortie du moyen de réception au moyen d'un signal reçu du moyen de traitement indiquant que le moyen de traitement n'est pas capable de recevoir d'autres données.

**11.** Dispositif de télécommunication selon l'une quelconque des revendications 7 à 10, dans lequel le moyen de traitement comprend l'un quelconque des éléments suivants : une CPU ; un lecteur vidéo ; une mémoire ; un support d'informations non volatil ; un autre émetteur-récepteur ; et un décodeur vocal.

**12.** Procédé de réduction du débit de données d'un message arrivant émis via une interface radio (4), comprenant les étapes suivantes :

réception de messages émis, dans un moyen de réception (22) conformément à un protocole ; et
sortie des messages à une sortie du moyen de réception ;
le procédé étant **caractérisé par** l'étape supplémentaire consistant à utiliser, en réponse à un encombrement présent et/ou prédit d'un flux de données à la sortie du moyen de réception, une caractéristique du protocole prévue pour un usage autre qu'un contrôle de flux afin de déclencher une réduction du débit de données d'un message arrivant par une demande d'une réduction de la taille d'au moins un paquet formant le message.

FIG. 1

TO/FROM BUS 12

FIG. 2

FIG. 3a

FIG. 3b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AD KAMERMAN ; LEO MONTEBAN.** WaveLAN-II: A High-Performance Wireless LAN for the Unlicensed Band. *Bell Labs Technical Journal,* 14 August 2002, vol. 2, 118-133